# EUROPÄISCHE PATENTSCHRIFT

(11) **EP 2 888 668 B1**
(45) Veröffentlichungstag und Bekanntmachung des Hinweises auf die Patenterteilung: **28.06.2017**
(21) Anmeldenummer: 13745851.9
(22) Anmeldetag: 07.08.2013
(51) Int. Cl.: G06F 13/40

(54) **VERFAHREN ZUM BETREIBEN EINES HAUSGERÄTS, HAUSGERÄT UND ELEKTRONIKBAUGRUPPE**
METHOD FOR OPERATING A HOUSEHOLD APPLIANCE, HOUSEHOLD APPLIANCE AND ELECTRONIC ASSEMBLY
PROCÉDÉ PERMETTANT DE FAIRE FONCTIONNER UN APPAREIL ÉLECTROMÉNAGER, APPAREIL ÉLECTROMÉNAGER ET ENSEMBLE ELECTRONIQUE

(30) Priorität: 21.08.2012 DE 102012214798
(43) Veröffentlichungstag der Anmeldung: 01.07.2015
(73) Patentinhaber: BSH Bosch und Siemens Hausgeräte GmbH, 81739 München (DE)
(72) Erfinder: GRADL, Markus, 93059 Regensburg (DE); HOLEN, Rune, N-4344 Bryne (NO); KÖPPL, Thomas, 93093 Donaustauf (DE); LEHMANN, Jens, 93138 Lappersdorf (DE); WEISS, Andreas, 93059 Regensburg (DE)
(86) Internationale Anmeldenummer: PCT/EP2013/066566
(87) Internationale Veröffentlichungsnummer: WO 2014/029623

(56) Entgegenhaltungen:
- DE-A1- 19 649 676
- GB-A- 2 352 540
- JP-A- 2003 067 323

## Beschreibung

Die Erfindung betrifft ein Verfahren zum Betreiben eines Hausgeräts sowie ein Hausgerät.

Hausgeräte, insbesondere elektrische Hausgeräte, sind bekannt. Durch den Einsatz von Elektronikbaugruppen kann die Bedienung eines Hausgeräts für einen Benutzer komfortabler gestaltet werden und zugleich die Steuerung von elektrischen Hausgeräten flexibler, d.h. intelligenter, ausgebildet sein, so dass ein ressoursenschonender Betrieb des Hausgeräts möglich wird.

Jedoch bedingen die immer komplexer werdenden Steuerungen und die immer komfortabler werdenden Bedienungen derartiger Hausgeräte, z.B. durch Touchdisplays, dass immer größer werdende Mengen an Daten, wie z.B. Betriebssoftware zum Betrieb des Hausgeräts und seiner Komponenten übertragen werden müssen, z.B. während der Fertigung des Hausgeräts. Bei gleichbleibender Übertragungsrate zur Übertragung der Daten führen aber die immer größer werdenden Datenmengen zu immer länger werdenden Übertragungsvorgängen und damit zu einer Verlängerung der Fertigung. Aus dem Dokument JP2003067323 ist ein Prozessorsystem für ein Hausgerät bekannt, in dem ein erster Bus den Prozessor, Speicher und Peripheriegeräte miteinander verbindet. Die Peripheriegeräte sind zusätzlich über einen zweiten Bus und eine Signalschaltmatrix miteinander verbindbar, wobei die Verbindung der Peripheriegeräte über den zweiten Bus durch die CPU über den ersten Bus bestimmt wird. Es ist daher die der Erfindung zugrundeliegende Aufgabe, den Übertragungsvorgang zu dem Hausgerät zu beschleunigen.

Diese Aufgabe wird durch die Gegenstände mit den Merkmalen nach den unabhängigen Ansprüchen gelöst. Vorteilhafte Weiterbildungen sind Gegenstand der abhängigen Ansprüche, der Beschreibung sowie der Zeichnungen.

Die vorliegende Erfindung basiert auf der Erkenntnis, dass die Übertragungsrate gesteigert werden kann, wenn ein weiterer Bus verwendet wird. Ein Merkmal der Erfindung list ein Verfahren zum Betreiben eines Hausgeräts mit zumindest zwei Elektronikbaugruppen gelöst, wobei die zumindest zwei Elektronikbaugruppen mit einem ersten Bus des Hausgeräts elektrische Signale übertragend verbunden sind und die zumindest zwei Elektronikbaugruppen mit einem zweiten Bus des Hausgeräts elektrische Signale übertragend verbindbar sind, bei dem auf den ersten Bus ein Aktivierungssignal eingespeist wird, und auf Empfang des Aktivierungssignals eine der Elektronikbaugruppen mit dem zweiten Bus verbunden wird. Dadurch wird der technische Vorteil erreicht, dass nach Herstellen der Verbindung über den zweiten Bus dieser zweite Bus zur Übertragung von Daten, wie z.B. Betriebssoftware zum Betrieb des Hausgeräts und seiner Komponenten genutzt werden kann.

Unter einem Hausgerät wird insbesondere ein elektrisches Hausgerät verstanden, also ein durch elektrische Energie betriebener Gebrauchsgegenstand für private oder gewerbliche Nutzung im Haushalt. Mit Hilfe von elektrischer Energie können mit dem Hausgerät eine oder mehrere Aufgaben im Haushalt erledigt werden. Die Hausgeräte werden direkt vom Stromnetz mit Energie versorgt oder sind als transportable Hausgeräte mit Akkumulatoren oder Batterien als Energiespeicher ausgestattet.

Bei den Hausgeräten kann es sich Hausgeräte zur Unterhaltung (Unterhaltungselektronik; auch braune Ware genannt), um Hausgeräte zur Klimatisierung/Heizung (Klimageräte, Heizungen; auch rote Ware genannt) oder um Haushaltsgeräte (auch weiße Ware genannt) handeln. Unter einem Haushaltsgerät wird ein Hausgerät verstanden, das zur Haushaltsführung eingesetzt wird. Das kann ein Haushaltsgroßgerät sein, wie beispielsweise eine Waschmaschine, ein Wäschetrockner, ein Waschtrockner, eine Geschirrspülmaschine, ein Gargerät, eine Dunstabzugshaube oder ein Kältegerät, wie z.B. ein Kühlschrank, ein Gefrierschrank oder eine Kühlgefrierkombination. Das Haushaltsgerät kann auch ein Haushaltskleingerät sein, wie beispielsweise ein Warmwasserbereiter, ein Kaffeevollautomat, eine Küchenmaschine oder ein Staubsauger. In einem weiteren Merkmal der Erfindung ist mit dem Hausgerät über den ersten Bus ein Gerät verbunden, und das Aktivierungssignal wird von dem Gerät zu dem Hausgerät übertragen. Dadurch wird der technische Vorteil erreicht, dass durch ein externes Gerät, z.B. eine Fertigungsvorrichtung zum Überspielen von Software zum Betrieb des Hausgeräts und seiner Komponenten, oder ein Service- und Diagnosegerät, der zweite Bus durch das Aktivierungssignal aktiviert werden kann. Somit sind keine baulichen Veränderungen am Hausgerät oder seinen Komponenten nötig.

In einer vorteilhaften Ausführungsform wird über den zweiten Bus eine einzige Verbindung aus mindestens zwei möglichen Elektronikbaugruppen hergestellt. Dadurch wird der technische Vorteil erreicht, dass so ein direkter Zugriff von dem Gerät über den zweiten Bus auf eine der Elektronikbaugruppen möglich wird, so dass durch diese unmittelbare Verbindung eine besonders schnelle Datenübertragung möglich ist. In einem weiteren Merkmal der Erfindung wird mit dem ersten Bus eine elektrische Signale übertragende Verbindung mit einem Gerät gebildet. Dadurch wird der technische Vorteil erreicht, dass eine einfache, aber technisch robuste Verbindung zwischen Hausgerät und dem Gerät gebildet wird. In einem weiteren Merkmal der Erfindung wird mit dem zweiten Bus ein USB-, ein Firewire- oder ein Esata-Bus mit einem Gerät gebildet. Dadurch wird der technische Vorteil erreicht, dass ein zweiter Bus mit einer hohen Leistungsfähigkeit, großen Verbreitung und hoher Zuverlässigkeit zur Bildung einer Verbindung zwischen Hausgerät und dem Gerät zur Verfügung steht. In einem weiteren Merkmal der Erfindung wird durch das Aktivierungssignal ein einer Elektronikbaugruppe zugeordnetes Schaltelement angesteuert. Dadurch wird der technische Vorteil erreicht, dass jede Elektronikbaugruppe einzeln angesteuert und damit ausgewählt werden kann. So können zu jeder der Elektronikbaugruppe unter Verwendung des zweiten Buses Daten, wie z.B. Betriebssoftware zum Betrieb des Hausgeräts und seiner Komponenten, übertragen werden.

In einer vorteilhaften Ausführungsform wird als Schaltelement ein Tri-State-Schaltelement verwendet, das die angesteuerte Elektronikbaugruppe mit dem zweiten Bus verbindet, und das die zumindest eine nicht angesteuerte Elektronikbaugruppe von dem zweiten Bus trennt. Dadurch wird der technische Vorteil erreicht, dass sichergestellt ist, dass, wenn eine der Elektronikbaugruppen mit dem zweiten Bus verbunden ist, die zumindest eine andere Elektronikbaugruppe vom zweiten Bus getrennt ist. So sind Fehlfunktionen zuverlässig ausgeschlossen, bei denen mehr als eine Elektronikbaugruppe mit dem zweiten Bus verbunden ist.

Gemäß einem zweiten Aspekt ist ein Merkmal der Erfindung ein Hausgerät, aufweisend zumindest zwei Elektronikbaugruppen, wobei die zumindest zwei Elektronikbaugruppen mit einem ersten Bus des Hausgeräts elektrische Signale übertragend verbunden sind und die zumindest zwei Elektronikbaugruppen mit einem zweiten Bus des Hausgeräts elektrische Signale übertragend verbindbar sind. Auch dadurch wird der technische Vorteil erreicht, dass nach Herstellen der Verbindung mit dem zweiten Bus dieser zweite Bus zur Übertragung von Daten, wie z.B. Betriebssoftware zum Betrieb des Hausgeräts und seiner Komponenten, genutzt werden kann. In einem weiteren Merkmal der Erfindung ist das Hausgerät mit einem Gerät ein Aktivierungssignal übertragend verbindbar, wobei das Hausgerät ausgebildet ist, auf Empfang des Aktivierungssignals eine der Elektronikbaugruppen mit dem zweiten Bus zu verbinden. Dadurch wird der technische Vorteil erreicht, dass durch ein externes Gerät, z.B. eine Fertigungsvorrichtung zum Überspielen von Software zum Betrieb des Hausgeräts und seiner Komponenten, oder ein Service- und Diagnosegerät, der zweite Bus durch das Aktivierungssignal aktiviert werden kann. Somit sind keine baulichen Veränderungen am Hausgerät oder seinen Komponenten nötig.

In einer vorteilhaften Ausführungsform ist über den zweiten Bus eine einzige Verbindung aus mindestens zwei möglichen Elektronikbaugruppen mit dem Gerät herstellbar. Dadurch wird der technische Vorteil erreicht, dass so ein direkter Zugriff von dem Gerät über den zweiten Bus auf eine der Elektronikbaugruppen möglich wird, so dass durch diese unmittelbare Verbindung eine besonders schnelle Datenübertragung möglich ist. In einem weiteren Merkmal der Erfindung ist der erste Bus zur Bildung einer elektrische Signale übertragenden Verbindung mit einem Gerät ausgebildet. Dadurch wird der technische Vorteil erreicht, dass eine einfache, aber technisch robuste Verbindung zwischen Hausgerät und dem Gerät gebildet wird. In einem weiteren Merkmal der Erfindung ist der zweite Bus zur Bildung eines USB-, eines Firewire- oder eines Esata -Busses mit dem zumindest einem Gerät ausgebildet. Dadurch wird der technische Vorteil erreicht, dass ein zweiter Bus mit einer hohen Leistungsfähigkeit, großen Verbreitung und hoher Zuverlässigkeit zur Bildung einer Verbindung zwischen Hausgerät und dem Gerät zur Verfügung steht. In einem weiteren Merkmal der Erfindung ist zumindest einer Elektronikbaugruppe ein Schaltelement zugeordnet, das durch das Aktivierungssignal ansteuerbar ist. Dadurch wird der technische Vorteil erreicht, dass jede Elektronikbaugruppe einzeln angesteuert und damit ausgewählt werden kann. So können zu jeder der Elektronikbaugruppen unter Verwendung des zweiten Busses Daten, wie z.B. Software zum Betrieb des Hausgeräts und seiner Komponenten, übertragen werden.

In einer vorteilhaften Ausführungsform ist das Schaltelement ein Tri-State-Schaltelement, das ausgebildet ist, die angesteuerte Elektronikbaugruppe mit dem zweiten Bus zu verbinden und die zumindest eine nicht angesteuerte Elektronikbaugruppe von dem zweiten Bus zu trennen. Dadurch wird der technische Vorteil erreicht, dass sichergestellt ist, dass, wenn eine der Elektronikbaugruppen mit dem zweiten Bus verbunden ist, die zumindest eine andere Elektronikbaugruppe vom zweiten Bus getrennt ist. So sind Fehlfunktionen zuverlässig ausgeschlossen, bei denen mehr als eine Elektronikbaugruppe mit dem zweiten Bus verbunden sind.

Weitere Ausführungsbeispiele werden Bezug nehmend auf die beiliegenden Zeichnungen erläutert. Es zeigen:
Fig. 1 eine schematische Darstellung eines ersten Schritts eines Ausführungsbeispiels eines erfindungsgemäßen Verfahrens,
Fig. 2 eine schematische Darstellung eines weiteren Schritts eines Ausführungsbeispiels eines erfindungsgemäßen Verfahrens, und
Fig. 3 eine schematische Darstellung eines weiteren Schritts eines Ausführungsbeispiels eines erfindungsgemäßen Verfahrens.

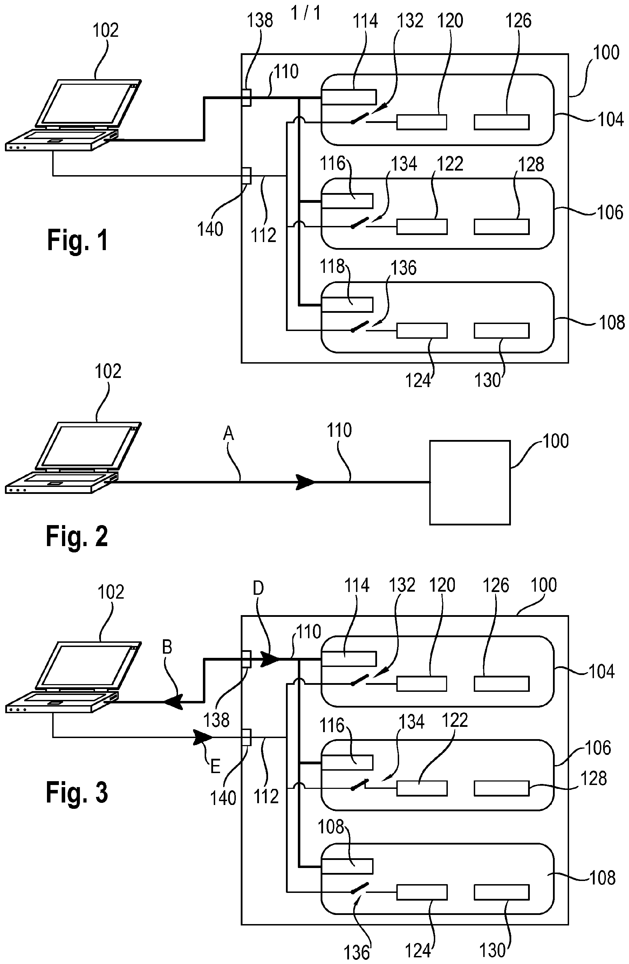

Fig. 1 zeigt ein Hausgerät 100, das im vorliegenden Ausführungsbeispiel als Haushaltsgerät ausgebildet ist.

Das Hausgerät 100 weist im vorliegenden Ausführungsbeispiel drei Elektronikbaugruppen 104, 106, 108 auf, die zur Ansteuerung von Komponenten (nicht dargestellt) des Hausgeräts 100 ausgebildet sind, z.B. gemäß einer Ablaufsteuerung zum Betrieb des Hausgeräts 100, aber auch untereinander während des Betriebs des Hausgeräts 100 durch Übertragung von elektrischen Signalen kommunizieren. Zur Ansteuerung der Komponenten des Hausgeräts 100 und/oder zur Übertragung von elektrischen Signalen weist das Hausgerät 100 einen ersten Bus 110 auf, der die Elektronikbaugruppen 104, 106, 108 und die Komponenten des Hausgeräts 100, wie z.B. Aktuatoren (nicht dargestellt) und/oder Sensoren (nicht dargestellt) mit den Elektronikbaugruppen 104, 106, 108 elektrische Signale übertragend verbindet. Bei den elektrischen Signalen kann es sich z.B. Aktivierungssignale zur Ansteuerung der Aktuatoren und/oder Messsignale von Sensoren handeln.

Zur elektrische Signale übertragenden Verbindung mit dem ersten Bus 110 weisen die Elektronikbaugruppen 104, 106, 108 je eine erste Schnittstelle 114, 116, 118 auf. Der erste Bus 110 ist im vorliegenden Ausführungsbeispiel zur Bildung einer Verbindung, z.B. einer peer-to-peer-Verbindung ausgebildet.

Die Elektronikbaugruppen 104, 106, 108 weisen je einen Speicher 126, 128, 130 auf. Die Speicher 126, 128, 130 können im vorliegenden Ausführungsbeispiel als RAM oder ROM ausgebildet sein. In den einzelnen Speichern 126, 128, 130 ist z.B. Betriebssoftware abgespeichert, die z.B. den bestimmungsgemäßen Ablauf eines Programms zur Hausgerätesteuerung sicherstellt, oder zum Betrieb des ersten Buses 110 nötig ist. Ferner können während des Betriebs des Hausgeräts 100 z.B. Messwerte von Sensoren in einzelnen Speicher 126, 128, 130 oder sonstige Daten, wie z.B. Betriebsdaten, abgespeichert werden.

Neben dem ersten Bus 110 weist das Hausgerät 100 einen zweiten Bus 112 auf. Die Elektronikbaugruppen 104, 106, 108 weisen je eine zweite Schnittstelle 120, 122, 124 auf, die eine Verbindung zur Übertragung elektrischen Signalen, z.B. von Daten und/oder Betriebssoftware mit der jeweiligen Elektronikbaugruppe 104, 106, 108 über den zweiten Bus 112 herstellt. Im vorliegenden Ausführungsbeispiel ist der zweite Bus 112 als USB-Bus ausgebildet. Anstelle eines USB-Busses kann auch ein Firewire- oder ein Esata-Bus Verwendung finden.

Im vorliegenden Ausführungsbeispiel ist jede der Elektronikbaugruppen 104, 106, 108 einem Schaltelement 132, 134, 136 zugeordnet. Im vorliegenden Ausführungsbeispiel befinden sich die Schaltelemente 132, 134, 136 im geöffneten Zustand im Normalzustand, d.h. wenn das Hausgerät 100 bestimmungsgemäß genutzt wird. In einem alternativen Ausführungsbeispiel können sich die Schaltelemente 132, 134, 136 im geschlossenen Zustand befinden. Im geöffneten Zustand trennen die Schaltelemente 132, 134, 136 die jeweilige Elektronikbaugruppe 104, 106, 108 vom zweiten Bus 112, während die Schaltelemente 132, 134, 136 im geschlossenen Zustand die jeweilige Elektronikbaugruppe 104, 106, 108 mit dem zweiten Bus 112 elektrische Signale übertragend verbindet.

Um sicherzustellen, dass, wenn eines der Schaltelemente 132, 134, 136 geschlossen ist und damit die dem Schaltelement 132, 134, 136 zugeordnete Elektronikbaugruppe 104, 106, 108 mit dem zweiten Bus 112 elektrische Signale übertragend verbunden sind, alle anderen Elektronikbaugruppen 104, 106, 108 aber vom zweiten Bus 112 getrennt sind, sind die Schaltelemente 132, 134, 136 im vorliegenden Ausführungsbeispiel als Tri-State Schaltelemente ausgebildet. So ist sichergestellt, dass, wenn eines der Schaltelemente 132, 134, 136 von dem offenen in den geschlossenen Zustand wechselt, die anderen Schaltelemente 132, 134, 136 im offenen Zustand verbleiben.

In der in Fig. 1 gezeigten Darstellung sind die Elektronikbaugruppen 104, 106, 108 über die ersten Schnittstellen 114, 116, 118 dem ersten Bus 110 und einer ersten Anschlussschnittstelle 138 mit einem Gerät 102 elektrische Signale übertragend verbunden, das im vorliegenden Ausführungsbeispiel als Laptop ausgebildet ist. Das Gerät 102 ist im vorliegenden Ausführungsbeispiel als Service- und Diagnosegerät ausgebildet und erlaubt es, Softwareupdates, z.B. aktualisierte Programmversionen zur Hausgerätesteuerung, auf das Hausgerät 100 aufzuspielen. Daneben oder alternativ erlaubt das Gerät 102 durch Auslesen von Fehlerspeichern (nicht dargestellt) der Elektronikbaugruppen 104, 106, 108 eine Ursachenbestimmung bei Fehlfunktionen des Hausgeräts 100.

Ferner sind die Elektronikbaugruppen 104, 106, 108 über die zweiten Schnittstellen 120, 122, 124, dem zweiten Bus 112 und einer zweiten Anschlussschnittstelle 140 mit dem Gerät 102 verbunden, wobei die Schaltelemente 132, 134, 136 im offenen Zustand sind, so dass keine elektrischen Signale übertragen werden können.

Fig. 2 zeigt, dass zu Beginn eines Ausführungsbeispiels des Verfahrens ein Aktivierungssignal A vom Gerät 102 über den ersten Bus 110 zu dem Hausgerät 100 übertragen wird.

Fig. 3 zeigt, dass auf Empfang des Aktivierungssignals A das Hausgerät 100 in einen Spezialmodus gesetzt wird, der sich vom Betriebsmodus dadurch unterscheidet, dass im vorliegenden Ausführungsbeispiel ein bestimmungsgemäßer Gebrauch des Hausgeräts 100 nicht möglich ist. Z. B. unterscheidet sich der Spezialmodus vom Betriebsmodus des Hausgeräts 100 dadurch, dass eine Bedienung des Hausgeräts 100 durch einen Benutzer durch Betätigen eines Bedienelements (nicht dargestellt), z.B. eines Touchdisplay, nicht möglich ist. In einem alternativen Ausführungsbeispiel kann aber im Spezialmodus auch ein bestimmungsgemäßer Gebrauch im Betriebsmodus möglich sein.

Ferner zeigt Fig. 3, dass das Aktivierungssignal A bewirkt, dass das der zweiten Elektronikbaugruppe 106 zugeordnete Schaltelement 134, auf Empfang des Aktivierungssignal A vom offenen in den geschlossenen Zustand wechselt. Nun ist die zweite Elektronikbaugruppe 106 mit dem zweiten Bus 112 elektrische Signale übertragend verbunden, während die erste Elektronikbaugruppe 104 und die dritte Elektronikbaugruppe 108 nicht mit dem zweiten Bus 112 verbunden sind, da die der ersten Elektronikbaugruppe 104 und der dritten Elektronikbaugruppe 108 zugeordneten Schaltelemente 132, 136 im offenen Zustand verblieben sind.

Nun können Daten D, wie z.B. Betriebssoftware zum Betrieb des Hausgeräts 100 und seiner Komponenten, von dem Gerät 102 über die zweite Anschlussschnittstelle 140 den zweiten Bus 112 und die zweite Schnittstelle 122 auf die zweite Elektronikbaugruppe 106 aufgespielt werden, um dann im Speicher 128 der zweiten Elektronikbaugruppe 106 abgespeichert zu werden.

Alternativ kann der zweite Bus 112 auch eine Verbindung mit einer anderen Datenquelle als dem Gerät 102 bilden, um Daten D in den Speicher 128 der zweiten Elektronikbaugruppe 106 zu laden.

Nachdem die Daten D von dem Gerät 102 vollständig in den Speicher 128 der zweiten Elektronikbaugruppe 106 geladen wurden und nun betriebsbereit zur Verfügung stehen, sendet die zweite Elektronikbaugruppe 106 ein entsprechendes Bestätigungssignal B an das Gerät 102. Das Bestätigungssignal B kann wie im vorliegenden Ausführungsbeispiel über die erste Schnittstelle 116, den ersten Bus 110 und die erste Anschlussschnittstelle 138 oder alternativ auch über die zweite Schnittstelle 122, den zweiten Bus 112 und die zweite Anschlussschnittstelle 140 übertragen werden. Nach Versand des Bestätigungssignal B deaktiviert das Hausgerät 100 den zweiten Bus 112, indem das zweite Schaltelement 134 wieder in den offenen Zustand gebracht wird, so dass keine Daten D mehr über den zweiten Bus 112 übertragen werden können.

Wenn diese Tätigkeiten beendet sind, kann mittels des Geräts 102 ein Endsignal E erzeugt und über die erste Anschlussstelle 138, den ersten Bus 110 und die erste Schnittstellen 114, 116, 118 zu einer der Elektronikbaugruppen 104, 106, 108 des Hausgeräts 100 übertragen werden. Auf Empfang des Endsignals E bewirkt z.B. die ausgewählte der Elektronikbaugruppen 104, 106, 108 einen Wechsel vom Spezialmodus in den Betriebsmodus des Hausgeräts 100. Nun kann eine Bedienperson wieder Eingaben an der Bedieneinheit vornehmen, um das Hausgerät 100 z.B. bestimmungsgemäß in Betrieb zu nehmen.

### Bezugszeichenliste

- 100: Hausgerät
- 102: Gerät
- 104: Elektronikbaugruppe
- 106: Elektronikbaugruppe
- 108: Elektronikbaugruppe
- 110: erster Bus
- 112: zweiter Bus
- 114: erste Schnittstelle
- 116: erste Schnittstelle
- 118: erste Schnittstelle
- 120: zweite Schnittstelle
- 122: zweite Schnittstelle
- 124: zweite Schnittstelle
- 126: Speicher
- 128: Speicher
- 130: Speicher
- 132: Schaltelement
- 134: Schaltelement
- 136: Schaltelement
- 138: erste Anschlussschnittstelle
- 138: zweite Anschlussschnittstelle

- A: Aktivierungssignal
- B: Betätigungssignal
- D: Daten
- E: Endsignal

## Patentansprüche

1. Verfahren zum Betreiben eines Hausgeräts (100), aufweisend zumindest zwei Elektronikbaugruppen (104, 106, 108), wobei die zumindest zwei Elektronikbaugruppen (104, 106, 108) mit einem ersten Bus (110) des Hausgeräts (100) elektrische Signale übertragend verbunden sind und die zumindest zwei Elektronikbaugruppen (104, 106, 108) mit einem zweiten Bus (112) des Hausgeräts (100) elektrische Signale übertragend verbindbar sind,
**dadurch gekennzeichnet, dass**
mit dem Hausgerät (100) über den ersten und zweiten Bus (110, 112) ein Gerät (102) verbunden ist, und ein Aktivierungssignal (A) von dem Gerät (102) zu dem Hausgerät (100) übertragen wird, welches auf den ersten Bus (110) eingespeist wird,
wobei durch das Aktivierungssignal (A) zumindest ein einer Elektronikbaugruppe (104, 106, 108) zugeordnetes Schaltelement (132, 134, 136) derartig ansteuert wird, dass bei Empfang des Aktivierungssignals (A) beim Schaltelement die Elektronikbaugruppe (104, 106, 108) mit dem zweiten Bus (112) verbunden wird und der zweite Bus (112) einen USB-, einen Firewire- oder einen Esata-Bus zwischen dem Gerät (102) und der Elektronikbaugruppe bildet.

2. Verfahren nach Anspruch 1, **dadurch gekennzeichnet, dass** als Schaltelement (132, 134, 136) ein Tri-State-Schaltelement verwendet wird, dass die angesteuerte Elektronikbaugruppe (104, 106, 108) mit dem zweiten Bus (112) verbindet, wobei, wenn das Schaltelement von einem offenen in einen geschlossenen Zustand wechselt, andere den nicht angesteuerten Elektronikbaugruppen zugeordnete Schaltelemente im offenen Zustand verbleiben, so dass die zumindest eine nicht angesteuerte Elektronikbaugruppe (104, 106, 108) von dem zweiten Bus (112) getrennt bleibt.

3. Hausgerät (100), aufweisend zumindest zwei Elektronikbaugruppen (104, 106, 108), wobei die zumindest zwei Elektronikbaugruppen (104, 106, 108) mit einem ersten Bus (110) des Hausgeräts (100) elektrische Signale übertragend verbunden sind und die zumindest zwei Elektronikbaugruppen (104, 106, 108) mit einem zweiten Bus (112) des Hausgeräts 8100) elektrische Signale übertragend verbindbar sind, **dadurch gekennzeichnet, dass** das Hausgerät (100) über den ersten Bus (110) mit einem Gerät (102) ein Aktivierungssignal (A) übertragend verbindbar ist, wobei jeder Elektronikbaugruppe (104, 106, 108) ein Schaltelement (132, 134, 136) zugeordnet ist, das durch das Aktivierungssignal (A) ansteuerbar ist, wobei das Hausgerät (100) ausgebildet ist, bei Empfang des Aktivierungssignals (A) eine der Elektronikbaugruppen (104, 106, 108) mit dem zweiten Bus (112) zu verbinden, wobei der zweite Bus (112) zur Bildung eines USB-, eines Firewire- oder eines Esata -Busses zwischen der Elektronikbaugruppe und dem Gerät (102) ausgebildet ist.

4. Hausgerät (100) nach Anspruch 3, **dadurch gekennzeichnet, dass** die Schaltelemente (132, 134, 136) Tri-State-Schaltelemente sind, die ausgebildet sind, die angesteuerte Elektronikbaugruppe (104, 106, 108) mit dem zweiten Bus (112) zu verbinden, und die zumindest eine nicht angesteuerte Elektronikbaugruppe (104, 106, 108) von dem zweiten Bus (112) zu trennen.

## Claims

1. Method for operating a household appliance (100), having at least two electronic assemblies (104, 106, 108), wherein the at least two electronic assemblies (104, 106, 108) are connected to a first bus (110) of the household appliance (100) in a manner so as to transmit electrical signals and the at least two electronic assemblies (104, 106, 108) can be connected to a second bus (112) of the household appliance (100) in a manner so as to transmit electrical signals,
**characterised in that**
a device (102) is connected to the household appliance (100) by way of the first and second bus (110, 112), and an activation signal (A) is transmitted from the device (102) to the household appliance (100), which is fed to the first bus (110),
wherein at least one switching element (132, 134, 136) assigned to an electronic assembly (104, 106, 108) is controlled by the activation signal (A) such that upon receipt of the activation signal (A) at the switching element, the electronic assembly (104, 106, 108) is connected to the second bus (112) and the second bus (112) forms a USB, a Firewire or an eSATA bus between the device (102) and the electronic assembly.

2. Method according to claim 1, **characterised in that** a tri-state switching element is used as a switching element (132, 134, 136), which connects the controlled electronics assembly (104, 106, 108) to the second bus (112), wherein if the switching element switches from an open to a closed state, other switching elements assigned to the non-controlled electronic assemblies remain in the open state, so that the at least one non-controlled electronic assembly (104, 106, 108) remains separated from the second bus (112).

3. Household appliance (100), having at least two electronic assemblies (104, 106, 108), wherein the at least two electronic assemblies (104, 106, 108) are connected to a first bus (110) of the household appliance (100) in a manner so as to transmit electrical signals and the at least two electronic assemblies (104, 106, 108) can be connected to a second bus (112) of the household appliance (100) in a manner so as to transmit electrical signals, **characterised in that** the household appliance (100) can be connected by way of the first bus (110) to a device (102) in a manner so as to transmit an activation signal (A), wherein each electronic assembly (104, 106, 108) is assigned a switching element (132, 134, 136) which can be controlled by the activation signal (A), wherein upon receipt of the activation signal (A) the household appliance (100) is embodied to connect one of the electronic assemblies (104, 106, 108) with the second bus (112), wherein the second bus (112) is embodied to form a USB, a Firewire or an eSATA bus between the electronic assembly and the device (102).

4. Household appliance (100) according to claim 3, **characterised in that** the switching elements (132, 134, 136) are tri-state switching elements, which are embodied to connect the controlled electronic assembly (104, 106, 108) to the second bus (112) and to separate the at least one non-controlled electronic assembly (104, 106, 108) from the second bus (112).

## Revendications

1. Procédé de fonctionnement d'un appareil ménager (100) présentant au moins deux ensembles électroniques (104, 106, 108), les au moins deux ensembles électroniques (104, 106, 108) étant reliés à un premier bus (110) de l'appareil ménager (100) en transmettant des signaux électriques et les au moins deux ensembles électroniques (104, 106, 108) pouvant être reliés à un deuxième bus (110) de l'appareil ménager (100) en transmettant des signaux électriques,
**caractérisé en ce qu'**
un appareil (102) est relié à l'appareil ménager (100) par l'intermédiaire du premier et du deuxième bus (110, 112), et **en ce qu'**un signal d'activation (A) est transmis de l'appareil (102) vers l'appareil ménager (100), lequel signal est fourni sur le premier bus (110), au moins un élément de commutation (132, 134, 136) attribué à un ensemble électronique (104, 106, 108) étant commandé au moyen du signal d'activation (A) de manière à ce que, lors de la réception du signal d'activation (A) auprès de l'élément de commutation, l'ensemble électronique (104, 106, 108) soit relié au deuxième bus (112) et que le deuxième bus (112) forme un bus USB, un bus pare-feu ou un bus eSata entre l'appareil (102) et l'ensemble électronique.

2. Procédé selon la revendication 1, **caractérisé en ce qu'**un élément de commutation tri state est utilisé en tant qu'élément de commutation (132, 134, 136), lequel relie au deuxième bus (112) l'ensemble électronique (104, 106, 108) commandé, sachant que lorsque l'élément de commutation passe d'un état ouvert en un état fermé, d'autres éléments de commutation attribués aux ensembles électroniques non commandés restent à l'état ouvert de sorte que l'au moins un ensemble électronique (104, 106, 108) non commandé reste coupé du deuxième bus (112).

3. Appareil ménager (100) présentant au moins deux ensembles électroniques (104, 106, 108), les au moins deux ensembles électroniques (104, 106, 108) étant reliés à un premier bus (110) de l'appareil ménager (100) en transmettant des signaux électriques et les au moins deux ensembles électroniques (104, 106, 108) pouvant être reliés à un deuxième bus (110) de l'appareil ménager (100) en transmettant des signaux électriques, **caractérisé en ce que** l'appareil ménager (100), par l'intermédiaire du premier bus (110), peut être relié à un appareil (102) en transmettant un signal d'activation (A), un élément de commutation (132, 134, 136) étant attribué à chaque ensemble électronique (104, 106, 108), lequel élément de commutation peut être commandé par le signal d'activation (A), l'appareil ménager (100) étant réalisé pour relier un des ensembles électroniques (104, 106, 108) au deuxième bus (112) lors de la réception du signal d'activation (A), le deuxième bus (112) étant réalisé pour former un bus USB, un bus pare-feu ou un bus eSata entre l'ensemble électronique et l'appareil (102).

4. Appareil ménager (100) selon la revendication 3, **caractérisé en ce que** les éléments de commutation (132, 134, 136) sont des éléments de commutation tri state qui sont réalisés pour relier au deuxième bus (112) l'ensemble électronique (104, 106, 108) commandé et pour couper du deuxième bus (112) l'au moins un ensemble électronique (104, 106, 108) non commandé.
